# EUROPÄISCHE PATENTSCHRIFT

(11) **EP 1 859 646 B1**
(45) Veröffentlichungstag und Bekanntmachung des Hinweises auf die Patenterteilung: **16.11.2011**
(21) Anmeldenummer: 06708484.8
(22) Anmeldetag: 23.02.2006
(51) Int. Cl.: H04Q 11/00

(54) **VERFAHREN ZUR ÜBERTRAGUNG VON DATENPAKETEN IN EINEM HYBRIDEN OPTISCHEN BURSTVERMITTLUNGSNETZWERK**
METHOD FOR TRANSFERRING DATA PACKETS IN A HYBRID OPTICAL BURST COMMUNICATION NETWORK
PROCEDE DE TRANSMISSION DE PAQUETS DE DONNEES DANS UN RESEAU HYBRIDE DE TRANSMISSION OPTIQUE PAR RAFALES

(30) Priorität: 09.03.2005 DE 102005010918
(43) Veröffentlichungstag der Anmeldung: 28.11.2007
(73) Patentinhaber: Nokia Siemens Networks GmbH & Co. KG, 81617 München (DE)
(72) Erfinder: DE VEGA RODRIGO, Miguel, B-1200 Woluwe St. Lambert Brussels (BE)
(86) Internationale Anmeldenummer: PCT/EP2006/060230
(87) Internationale Veröffentlichungsnummer: WO 2006/094906

(56) Entgegenhaltungen:
- EP-A- 1 635 604
- WO-A-01/84875
- ZAIM A H ET AL.: "Jumpstart just-in-time signaling protocol: a formal description using extended finite state machines" Optical Engineering SPIE USA, Bd. 42, Nr. 2, Februar 2003 (2003-02), Seiten 568-585, XP002382038 ISSN: 0091-3286
- KAHEEL A ET AL: "A strict priority scheme for quality-of-service provisioning in optical burst switching networks" COMPUTERS AND COMMUNICATION, 2003. (ISCC 2003). PROCEEDINGS. EIGHTH IEEE INTERNATIONAL SYMPOSIUM ON JUNE 30 - JULY 3, 203, PISCATAWAY, NJ, USA,IEEE, 2003, Seiten 16-21, XP010645997 ISBN: 0-7695-1961-X

## Beschreibung

Die Erfindung betrifft ein Verfahren zur Übertragung von Datenpaketen zwischen Netzknoten eines optischen Netzes nach dem Oberbegriff des Anspruchs 1.

Die Datenübertragung über zukünftige optische Netze kann mittels so genanntem "Optical Burst Switching" OBS erfolgen. Hierbei werden mehrere Datenpakete (beispielsweise IP-Pakete) zu so genannten Datenbursts akkumuliert und dann über einen Datenkanal eines entsprechend konzipierten optischen Netzes endet. Der Datenkanal entspricht einer bestimmten Wellenlänge eines Wellenlängenmultiplexsignals (WDM/DWDM), das gleichzeitig mehrere optische Einzelsignale (Kanäle) über eine optische Faser überträgt. Über einen dieser Übertragungskanäle können mehrere unterschiedliche Nachrichten übertragen, denen jeweils Folgen von Bursts zugeordnet sind. Bei höherem Verkehrsaufkommen kommt es zu größeren Verzögerungen bei der Aussendung der Datenbursts, da weniger freie Zeitschlitze zur Übertragung zur Verfügung stehen. Bei noch höherem Verkehrsaufkommen kommt es zu Blockierungen.

Bei einen anderen Netzkonzept, dem so genannten λ-Switching, bei dem mehrere Wellenlängen (Kanäle) eines WDM/DWDM-Systems zur Übertragung zur Verfügung stehen, ist die Schaltgranularität eine Wellenlänge. Folglich wird auch bei niedrigem Verkehrsaufkommen ein vollständiger Übertragungskanal belegt; man spricht von einer hoher "wavelength consumption", die entsprechend teuer ist. Keines dieser bekannten Verfahren ist optimal, wenn man die wesentlichen Kriterien Zeitverzögerung, Blockierungswahrscheinlichkeit und Nutzung des Übertragungskanals zugrunde legt.

Ein verbessertes Übertragungsverfahren, als APSON **"Adaptive Path Switched Network"** bezeichnet, ist in einer älteren Anmeldung Aktenzeichen 10339039 beschrieben. Nach der Übertragung eines Datenbursts bleibt der Übertragungskanal für die Übertragung weiterer Datenpakete "on the fly" desselben Endknotens offen. Die Übertragung wird erst dann unterbrochen, wenn ein anderer Knoten die Übertragungskapazität benötigt. Der entscheidende Vorteil bei diesem Verfahren ergibt sich durch den weiter bestehenden Übertragungskanal nach der Übertragung eines Datenbursts. Während dieser so genannten Consecutive-Phase werden Datenpakete "on the fly" ohne oder mit einer minimalen Verzögerung übertragen, da sie nicht zuerst zu einem Burst zusammengefasst. Die freie Übertragungskapazität wird so lange genutzt bis der Datenkanal, wenn kein anderer Datenkanal bzw. keine andere Wellenlänge zur Verfügung steht, von einer anderen Verbindung zur Übertragung von deren zu Bursts zusammengefassten Datenpaketen benötigt wird.

Die Qualität der Übertragung (Quality of Service (QoS)) betrifft die Punkte Blockierung bei der Übertragung von Bursts, deren Verzögerung (Delay) und den Verzögerungs-Jitter (Delay-Jitter). Um je nach Bedarf den Kunden einen zufrieden stellenden Service bieten zu können, wurde die Prioritätsklassen bei der Übertragung der Datenbursts eingeführt. So wurde für hohe Prioritätsklassen die Verwendung längerer Bursts und für niedrige Prioritätsklassen die Übertragung kürzerer Bursts vorgeschlagen. In der Praxis bewirken diese Vorschläge jedoch das Gegenteil des gewünschten Erfolges; Bursts mit hoher Priorität weisen wegen der höheren Offset-Time oft längere Verzögerungszeiten auf.

Jingxuan LIU und Nirwan ASARI beschreiben in dem Beitrag "Forward Resource Reservation for Provisioning in OBS Systems" IEEE 2002, Seiten 2777 - 2781 ein OBS-System, das unterschiedliche Qualitätsklassen verwendet. Ziel ist es, die Verzögerungszeit bis zur Aussendung eines Bursts in der höchsten für Real-Time-Traffic vorgesehenen Klasse zu reduzieren. Hierzu wird in der für Real-Time-Traffic vorgesehenen Klasse die Zeit bis zum Burstende kalkuliert und ein Header Paket zur Reservierung von Übertragungszeit ausgesendet. Das reicht jedoch für eine Übertragung mit höchsten Qualitätsanforderungen nicht aus. Auf Abhilfe bei Blockierungsproblemen wird nicht eingegangen.

Das gleiche Problem wird in der <Literaturstelle "Offset Time Decision (OTD) Algorithm for Guaranteeing the Requested QoS of High Priority Traffic in OBS Networks", Won-Ho so et al., APOC 2001, Beijing, China, Seiten 286 - 295 behandelt.Kern dieser Literaturstelle ist die Berechnung einer "Burst Loss Rate" einer "Offset Time". Qualitätsverbesserungen sind nur indirekt durch weitere nicht beschriebene Maßnahmen zu erwarten.

Im Beitrag von Yong WAN und Byrav RAMAMURTHY "CPQ: A CONTROL PACKET Queuing Optical Burst Switching Protocol for Supporting QoS", Broadnets 2004, San Jose, USA, October 2004 wird ein OBS System mit zwei Qualitätsklassen für Real-Time-Traffic und Not-Real-Time-Traffic beschrieben, das ein weiter entwickeltes JET-Protokoll (Just Enough Time) verwendet. Dem Real-Time-Traffic wird Priorität bei der Reservierung von Bandbreite (=Übertragungszeit) zugestanden. Eine Verlängerung der "Offset Time" soll die Blockierungswahrscheinlichkeit herabsetzen. Auch dies Verfahren ist für höhere Qualitätsanforderungen ungeeignet und kann auch die Blockierungswahrscheinlichkeit nur zeitweise verringern.

A. H. ZAIM et al. "Jumpstart just-in -time signaling protocol: a formal description using extended finite state machines", Optical Engineering SPIE USA, Bd. 42 (2), Seiten 568-585, XP-002382038, ISSN 00913286 beschreibt ein Burst-Übertragungssystem, das auch "persistent path connections" vorgesehen sind, während deren Bestehen eine beliebige Anzahl von kurzen Bursts übertragen werden.

In A. KAHEEL et al. wird ein Burst-Übertragungssystem mit verschieden QoS-Klassen (Quality of Service) beschrieben, das ein neues Reservierungsschema " Preemptiv Prioritized Just Enough Time" verwendet.

Aufgabe der Erfindung ist es, ein verbessertes und effektiveres Verfahren zur Übertragung von Datenpaketen mit unterschiedlichen Qualitätsanforderungen anzugeben. Ein solches Verfahren ist in Anspruch 1 angegeben.

Vorteilhafte Weiterbildungen der Verfahren sind in den Unteransprüchen angegeben.

Die Basisidee besteht in der Verwendung unterschiedlicher Burstlängen und einer unterschiedlichen "Reservation Time" für unterschiedliche Qualitätsklassen.

In der höchsten "ersten" Qualitätsklasse findet keine Burst-Übertragung mehr statt. Vielmehr werden die IP-Pakete über eine reservierte Verbindung praktisch ohne Verzögerung übertragen bis keine zu übertragende Daten mehr vorliegen. Der Vorteil sind minimale Verzögerung der Datenpakete und minimaler Verzögerungsjitter (Delay Jitter).

Mit geringer werdender Qualitätsklasse werden die Reservierungszeiten im Anschluss an einen Datenburst immer geringer bis sie nicht einmal die volle Länge eines verkürzten Datenbursts erreichen. Diese niedrigste, hier vierte Qualitätsklasse beschränkt sich daher in der Praxis auf die Nutzung freier Kapazitäten, während die höchste Qualitätsklasse bei Bedarf den gesamten Übertragungskanal umfasst.

Das Verfahren wird anhand von Figuren und Ausführungsbeispielen für die unterschiedlichen Qualitätsklassen näher erläutert.

Es zeigen:
Figur 1 ein Übertragungsnetz mit mehreren Netzknoten,
Figur 2 ein Zeitdiagramm zur Übertragung in der höchsten Prioritätsklasse,
Figur 3 ein Zeitdiagramm zur Übertragung in einer zweithöchsten Qualitätsklasse,
Figur 4 ein Zeitdiagramm zur Übertragung in einer niedrigeren Qualitätsklasse,
Figur 5 ein Zeitdiagramm zur Übertragung in einer niedrigsten Qualitätsklasse und
Figur 6 eine Gegenüberstellung der Qualitätsklassen..

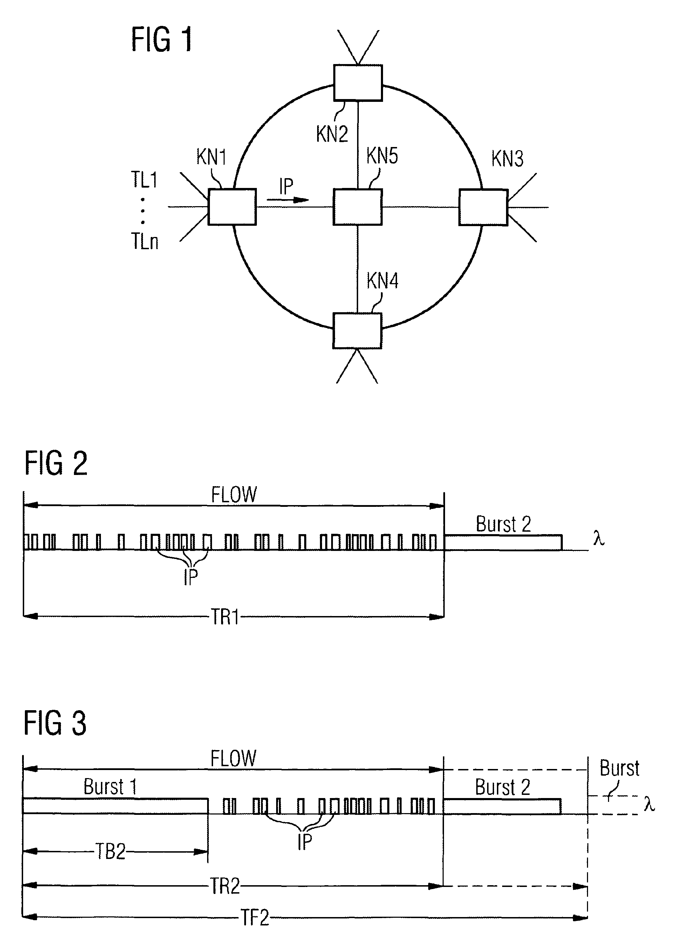

In Figur 1 ist ein Übertragungsnetz mit mehreren Netzknoten NK1 bis NK5 dargestellt. Von jeweils an einen Netzknoten NK1 angeschlossenen Teilnehmern werden Daten in Form von Datenpaketen (IP-Paketen) zum Netzknoten gesendet, dort zu Datenbursts zusammengefasst und dann zu einem Zielnetzknoten, beispielsweise dem Netzknoten NK3, übertragen. Der Einfachheit halber wird angenommen, dass die Daten aller an den Netzknotens NK1 angeschalteten Teilnehmer in derselben Qualitätsklasse übertragen werden sollen.

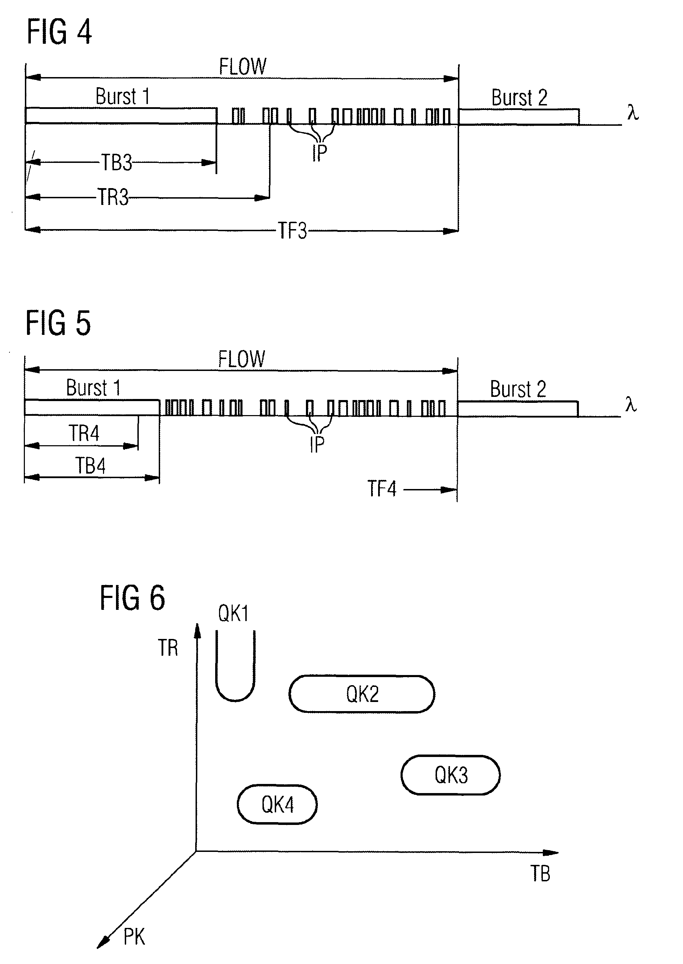

Figur 2 zeigt die Übertragung der Datenpakete IP von dem Netzknoten NK1 in der höchsten (ersten) Qualitätsklasse QK1 (Figur 6). Für die Übertragung ist praktisch ein kompletter Übertragungskanal reserviert, sodass sämtlicher Datenpakete IP vom Netzknoten NK1 direkt weitergesendet werden, ohne dass sie vorher zu Datenbursts zusammengefasst werden. Die Übertragung FLOW ist erst dann beendet, wenn der sendende Netzknoten NK1 dies bestimmt.

Bei mehreren Übertragungen in der höchsten Qualitätsklasse wird versucht, zwei Kanäle (Wellenlängen) zur Verfügung zu stellen. Zusätzlich zu den Qualitätsklassen können natürlich Prioritätsklassen eingeführt werden, so dass eine Anforderung zur Übertragung mit der gleichen Qualitätsklasse aber einer höheren Prioritätsklasse zur Unterbrechung oder Einschränkung der Übertragung "On the Fly" nach der garantierten Übertragungszeit führt. Die Steuerung erfolgt hierbei vom Netzwerkmanagementsystem. Das System sollte aber so ausgelegt sein, dass Beeinträchtigungen in der höchsten Prioritätsklasse nicht vorkommen.

Figur 2 zeigt die Übertragung der gesamten Datenmenge FLOW von Datenpaketen IP während der reservierten Zeit TR1. Nach Beendigung der Übertragung steht die Verbindung zur Verfügung, beispielsweise für die Übertragung anderer Daten, beginnend mit einem Datenburst "Burst 2" in einer niedrigeren Qualitätsklasse.

Bei einer zweithöchsten Qualitätsklasse erfolgt die Übertragung nach dem in Figur 3 angegebenen Schema. Zur Übertragung ist eine garantierte Übertragungszeit RT2 vorgesehen. Während dieser Zeit kann ein Datenburst Burst 1 erheblicher Länge TB2 und anschließend bei einem bereits geleerten Speicher des Netzknoten die Übertragung der folgenden Datenpakete "on the fly" erfolgen. Bei niedriger Beanspruchung der Übertragungskapazität kann dies dazu führen, dass die Datenpakete IP, wie bei der höchsten Qualitätsklasse, direkt übertragen werden, ohne dass sie zu Bursts zusammengefasst werden. Bei größeren Datenmengen erfolgt eine gemischte Übertragung von Datenbursts und Datenpaketen. Bei kurz gewählten Bursts ist der Verzögerungsjitter ebenfalls gering. Die Übertragung von Datenpaketen außerhalb der garantierten Übertragungszeit RT2 wird nur nach einer Dauer TF2 beendet, wenn der Übertragungskanal für eine Übertragung gleicher oder höherer Qualitätsklasse benötigt wird (strichliert dargestellt). Die Anforderung kann beispielsweise von einem weiteren Netzknotens (NK2, ...) kommen oder auch vom selben Netzknoten, der Teilnehmer unterschiedlicher Klassen zu unterschiedlichen Qualitätsklassen zusammenfasst. Die garantierte Übertragungszeit RT2 bleibt jedoch immer erhalten. Darüber hinaus wird ein bestimmter Anteil an der Übertragungskapazität des Übertragungskanals garantiert.

Figur 4 zeigt die Übertragung in einer niedrigeren dritten Qualitätsklasse QK3. Die garantierte Übertragungszeit RT3 ist wesentlich geringer als in der nächsthöheren Qualitätsklasse. In der Regel wird daher die Übertragung im Wesentlichen in der Form von Datenbursts (Burst 1) durchgeführt, wobei die Burst-Übertragungszeit TB3 unterhalb der garantierten Übertragungszeit RT3 liegt. Auch hier wird die Übertragung der Datenpakete nach der Übertragung eines Datenbursts nur dann nach der Übertragungszeit TF3 beendet, wenn die Übertragungskapazität für die Übertragung weiterer Datenmenge gleicher oder höherer Qualitätsklasse benötigt wird. Bei einem niedrig ausgelasteten Netz erfolgt daher die Übertragung in der Form von Datenpaketen IP und somit mit maximaler Qualität. Bei einem höher ausgelasteten Netz sind Verzögerung und Verzögerungsjitter noch moderat.

In Figur 5 ist die Übertragung bei einer niedrigsten vierten Qualitätsklasse QK4 dargestellt. Die garantierte Übertragungszeit RT4 kann dabei sogar unter der üblichen Burstlänge liegen. Nur wenn das Datennetz nicht ausgelastet ist, können zusätzliche Datenpakete "on the fly" im Anschluss an den Datenburst übertragen werden. Zwar erfolgt auch hier nur dann eine Unterbrechung der Datenübertragung nach einer variablen Zeit TF4, wenn andere Nachrichten mit höherer oder gleicher Qualitätsklasse übertragen werden solle. aber es ist noch nicht einmal die Übertragung in Form von Datenbursts garantiert. Diese Qualitätsklasse hat natürlich den Vorteil, dass sie besonders kostengünstig ist. Dafür müssen aber eventuell gravierende Qualitätsprobleme in Kauf genommen werden.

Selbstverständlich können Aufteilungen in weitere Qualitätsklassen und zusätzliche Prioritätsklassen mit einem beliebigen Verhältnis der garantierten Übertragungszeiten vorgenommen werden.

Figur 6 zeigt nochmals zusammenfassend die wesentlichen Eigenschaften der Qualitätsklassen QK1 - QK4, die hier alle einer Qualitätsklasse zugeordnet sind. Entsprechend der wählbaren Burstlänge, den Qualitätsklassen QK und Prioritätsklassen PK ist ein großes Spektrum von Übertragungseigenschaften definierbar.

## Patentansprüche

1. Verfahren zur Übertragung von Datenpaketen (IP) über Datenkanäle zwischen Knoten (NK1, NK2, ...) eines optischen Netzes, die gegebenenfalls zu Datenbursts (Burst 1, Burst 2) zusammengefasst werden,
**dadurch gekennzeichnet,**
**dass** in einer ersten Prioritätsklasse (QK1) einem sendenden Netzknoten (NK1) eine unbegrenzte Übertragungszeitspanne (TR1) zur Aussendung von Datenbursts (DB) und/oder Datenpaketen (IP) zugeteilt wird und
**dass** eine Übertragung der Datenpakete (IP) von dem sendenden Netzknoten (NK1) beendet wird,
**dass** in einer niedrigeren zweiten Qualitätsklasse (QK2) einem sendenden Netzknoten (NK2) begrenzte aber garantierte Übertragungszeitspannen (TR2) zugeteilt werden und dass nach Ablauf einer garantierten Übertragungszeitspanne (TR2) die Übertragung weiterhin erfolgt und erst durch die Anforderung von Übertragungszeit in einer höheren oder gleichen Qualitätsklasse (QK1, QK2) beendet wird.

2. Verfahren nach Anspruch 1,
**dadurch gekennzeichnet,**
**dass** in einer dritten Qualitätsklasse (QK3) einem sendenden Netzknoten garantierte Übertragungszeitspannen (TR3) zugewiesen werden, die kleiner als in der zweiten Qualitätsklasse (QK) sind, und dass nach Ablauf einer garantierten Übertragungszeitspanne (TR3) die Übertragung weiterhin erfolgt und erst durch die Anforderung von Übertragungszeit in einer höheren oder gleichen Qualitätsklasse (QK1, QK2; QK3) beendet wird.

3. Verfahren nach Anspruch 2,
**dadurch gekennzeichnet,**
**dass** in einer niedrigsten Qualitätsklasse (QK4) einem sendenden Netzknoten garantierte Übertragungszeitspannen (TR4) zu gewiesen werden, die gleich oder kürzer als die mögliche Burstlänge (T_{B}) ist,
und **dass** nach Ablauf einer garantierten Übertragungszeitspanne (TR4) die Übertragung weiterhin erfolgt und erst durch die Anforderung von Übertragungszeit in einer höheren Qualitätsklasse (QK1, QK2, QK3) beendet wird.

4. Verfahren nach einem der vorhergehenden Ansprüche,
**dadurch gekennzeichnet,**
**dass** Datenpakete (IP) gleicher Prioritätsklasse zu Datenbursts (Burst 1) zusammengefasst werden, die während der garantierten Übertragungszeitspannen (TR2 - TR4) übertragen werden und dass nach den garantierten Übertragungszeitspannen (TR2 - TR4) Datenpakete (IP) übertragen werden.

5. Verfahren nach einem der vorhergehenden Ansprüche,
**dadurch gekennzeichnet,**
**dass** die garantierte Übertragungszeitspanne (TR1 - TR4) in einem Header des Datenbursts (Burst 1) übertragen wird.

6. Verfahren nach einem der vorhergehenden Ansprüche,
**dadurch gekennzeichnet,**
**dass** jedem sendenden Netzknoten (NK1, NK2; ...) ein garantierter Anteil an der gesamten Übertragungskapazität eines Kanals entsprechend der Qualitätsklasse (QK1-QK4) zugeteilt wird.

## Claims

1. Method for transmitting data packets (IP) via data channels between nodes (NK1, NK2, ...) of an optical network, which may be combined to form data bursts (burst 1, burst 2), **characterized in that**
in a first priority class (QK1), an unlimited transmission period (TR1) is allocated to a transmitting network node (NK1) for sending out data bursts (DB) and/or data packets (IP), and **in that**
a transmission of the data packets (IP) is ended by the transmitting network node (NK1),
**in that** in a lower second quality class (QK2), limited but guaranteed transmission periods (TR2) are allocated to a transmitting network node (NK2) and **in that** after a guaranteed transmission period (TR2) has elapsed, the transmission is continued and only ended by the request for transmission time in a higher or equal quality class (QK1, QK2).

2. Method according to Claim 1, **characterized in that** in a third quality class (QK3), guaranteed transmission periods (TR3) which are smaller than in the second quality class (QK) are allocated to a transmitting network node and **in that** after a guaranteed transmission period (TR3) has elapsed, the transmission is continued and is only ended by the request for transmission time in a higher or equal quality class (QK1, QK2; QK3).

3. Method according to Claim 2, **characterized in that** in a lowest quality class (QK4), guaranteed transmission periods (TR4) which are equal to or shorter than the possible burst length (T_{B}) are allocated to a transmitting network node, and **in that** after a guaranteed transmission period (TR4) has elapsed, the transmission is continued and is only ended by the request for transmission time in a higher quality class (QK1, QK2, QK3).

4. Method according to one of the preceding claims, **characterized in that** data packets (IP) of equal priority class are combined to form data bursts (burst 1) which are transmitted during the guaranteed transmission periods (TR2-TR4), and **in that** after the guaranteed transmission periods (TR2-TR4), data packets (IP) are transmitted.

5. Method according to one of the preceding claims, **characterized in that** the guaranteed transmission periods (TR1-TR4) is transmitted in a header of the data burst (burst 1).

6. Method according to one of the preceding claims, **characterized in that** a guaranteed proportion of the total transmission capacity of a channel is allocated to each transmitting network node (NK1, NK2; ...) in accordance with the quality class (QK1-QK4).

## Revendications

1. Procédé de transmission de paquets de données (IP) sur des canaux de données entre des noeuds (NK1, NK2, ...) d'un réseau optique, lesquels sont regroupés, le cas échéant, en rafales de données (burst 1, burst 2), **caractérisé en ce que** :
- dans une première classe de priorité (QK1), un intervalle de temps de transmission illimité (TR1) est alloué à un noeud de réseau émetteur (NK1) pour émettre des rafales de données (DB) et/ou des paquets de données (IP) ; et
une transmission des paquets de données (IP) est terminée par le noeud de réseau émetteur (NK1) ;
dans une deuxième classe de qualité inférieure (QK2), des intervalles de temps de transmission limités, mais garantis (TR2), sont alloués à un noeud de réseau émetteur (NK2) et, après l'expiration d'un intervalle de temps de transmission garanti (TR2), la transmission se poursuit et n'est terminée que par la demande de temps de transmission dans une classe de qualité supérieure ou égale (QK1, QK2).

2. Procédé selon la revendication 1, **caractérisé en ce que** sont alloués à un noeud de réseau émetteur, dans une troisième classe de qualité (QK3), des intervalles de temps de transmission garantis (TR3) qui sont plus petits que dans la deuxième classe de qualité (QK) et **en ce que**, après l'expiration d'un intervalle de temps de transmission garanti (TR3), la transmission se poursuit et n'est terminée que par la demande de temps de transmission dans une classe de qualité supérieure ou égale (QK1, QK2 ; QK3).

3. Procédé selon la revendication 1, **caractérisé en ce que** sont alloués à un noeud de réseau émetteur, dans une classe de qualité la plus basse (QK4), des intervalles de temps de transmission garantis (TR4) qui sont égaux ou inférieurs à la longueur de rafale possible (T_{B}) et **en ce que**, après l'expiration d'un intervalle de temps de transmission garanti (TR4), la transmission se poursuit et n'est terminée que par la demande de temps de transmission dans une classe de qualité supérieure (QK1, QK2, QK3).

4. Procédé selon l'une des revendications précédentes, **caractérisé en ce que** des paquets de données (IP) d'une même classe de priorité sont regroupés en rafales de données (burst 1) qui sont transmises pendant les intervalles de temps de transmission garantis (TR2 - TR4) et **en ce que** des paquets de données (IP) sont transmis après les intervalles de temps de transmission garantis (TR2 - TR4).

5. Procédé selon l'une des revendications précédentes, **caractérisé en ce que** l'intervalle de temps de transmission garanti (TR1 - TR4) est transmis dans un en-tête de la rafale de données (burst 1).

6. Procédé selon l'une des revendications précédentes, **caractérisé en ce qu'**est allouée à chaque noeud de réseau émetteur (NK1, NK2 ; ...) une fraction garantie de la capacité de transmission totale d'un canal conformément à la classe de qualité (QK1 - QK4).
